# EUROPÄISCHE PATENTANMELDUNG

(11) **EP 0 803 416 A1**
(43) Veröffentlichungstag der Anmeldung: **29.10.1997**
(21) Anmeldenummer: 96106593.5
(22) Anmeldetag: 26.04.1996
(51) Int. Cl.: B60T 1/08, F01P 5/10, B60T 10/02

(54) **Antriebseinheit mit einem Motor und einem Retarder**

(71) Anmelder: Voith Turbo GmbH, 89522 Heidenheim (DE)
(72) Erfinder: Vogelsang, Klaus, 74564 Crailsheim (DE); Rose, Peter, 74523 Schwäbisch Hall (DE); Ott, Helmut, 74564 Crailsheim (DE); Heilinger, Peter, 74564 Crailsheim (DE)
(74) Vertreter: Weitzel, Wolfgang, Dr.-Ing. Patentanwalt

(57) **Zusammenfassung**

Die Erfindung betrifft eine Antriebseinheit;
mit einem hydrodynamischen Retarder (1);
der Retarder umfaßt ein Rotorschaufelrad, ein Statorschaufelrad sowie eine diese beiden umschließende Wand;
mit einem Kühlmittelkreislauf, dessen Kühlmittel zugleich Arbeitsmedium des Retarders ist;
dem Retarder ist eine Regeleinheit (2) in Fließrichtung des Arbeitsmediums nachgeordnet;
die Regeleinheit hat die folgenden Funktionen:
* eine Regelfunktion (2,2);
* Funktion der Einhaltung eines Mindest-Öffnungsquerschnittes (2,1);
* eine Rückschlagfunktion (2,3) zum Absperren von Arbeitsmedium entegen der gewollten Fließrichtung.

## Beschreibung

Die Erfindung betrifft eine Antriebseinheit mit einem Motor, einem Retarder und einer Pumpe. Eine solche Antriebseinheit ist aus DE 37 13 580 C1 bekannt geworden (Dokument 1).

Bei dieser bekannten Antriebseinheit dient der Retarder dazu, im Kühlmittelkreislauf das Kühlmittel der Fahrzeug-Kühlanlage sowohl im normalen Traktionsbetrieb als auch im Dauerbremsbetrieb umzuwälzen ("Wasserpumpen-Retarder"). Dabei wird dieser Retarder durch eine geeignete Ventilanordnung derart gesteuert, daß er im Bedartsfalle auch Bremsarbeit leisten kann. Bei der Funktion "Pumpen" soll die Leistungsaufnahme möglichst gering sein, während sie bei der Funktion "Bremsen" möglichst hoch sein soll. Die technischen Anforderungen sind somit sehr gegensätzlich. Dies führt dazu, daß die Funktion "Pumpen" nicht effektiv genug arbeitet, weil nämlich hierbei zu viel Leistung aufgenommen wird.

Trennt man hingegen die beiden Funktionen baulich, indem man außer dem Retarder eine separate Pumpe vorsieht, so lassen sich zwar Retarder und Pumpe derart auslegen, daß die Funktionen optimal erfüllt werden. Jedoch hat ein solches System einen hohen Raumbedarf. Dies ist nachteilig, da der Raum in Fahrzeugen gerade an der betreffenden Stelle sehr beengt ist.

Der Vollständigkeit halber sollen noch die folgenden Dokumente erwähnt werden:

Der aus der US-PS 3 720 372 (Dokument 2) bekannte Retarder ist mit dem Antriebsmotor integriert, dauernd mit der Kurbelwelle verbunden und stets vom Kühlmittel der Kühleinrichtung durchströmt. Dabei dient der Rotor des Retarders als Umwälzpumpe anstelle einer gesonderten Kühlmittelpumpe. Der Zweck dieser Einrichtung besteht darin, mittels des Retarders das Kühlmittel aufzuheizen, um den Fahrgast-Innenraum zu erwärmen. Diesem Zweck dient auch eine am Retarder angeordnete Steuereinrichtung, die lediglich die Verteilung des Kühlmittels in Abhängigkeit von dessen Temperatur in einer Bypaß-Leitung durch den Kühler leitet.

Aus der DE-PS 33 01 560 (Dokument 3) ist ferner ein Retarder bekannt, der über eine schaltbare Kupplung mit der Kurbelwelle des Antriebsmotors und den Treibrädern des Fahrzeuges verbunden ist. Die Aufgabe des Retarders ist jedoch nicht die Aufnahme und Umsetzung hoher kinetischer Bremsenergie des Fahrzeuges in Wärme. Der Retarder wird ausschließlich als Heizgerät betrieben, wobei die Heizleistung unter Berücksichtigung einer zur Verfügung stehenden Antriebsleistung gesteuert werden soll. Das Kühlmittel des Motors ist gleichzeitig die Betriebsflüssigkeit des Retarders.

Ein aus der DE-AS 1 946 167 (US-PS 3 650 358) bekannter Retarder ist direkt mit der Kurbelwelle einer Verbrennungskraftmaschine verbunden, deren Kühlmittel auch als Betriebsflüssigkeit für den Retarder dient. Der Vorteil dieser Betriebsweise liegt darin, daß die anfallende Wärme unmittelbar in dem dem Kühler zugeleiteten Kühlmittel entwickelt wird und ein Wärmetauscher zwischen zwei Flüssigkeiten entbehrlich ist.

EP 95113594 beschreibt eine Antriebseinheit mit einem Motor und einem hydrodynamischen Retarder. Dabei ist zum Fördern des Kühlmittels ein Pumpenlaufrad vorgesehen, das axial zum Rotorschaufelrad des Retarders angeordnet ist.

Die bisher bekannten Retardersysteme sind relativ kompliziert im Aufbau und teuer in der Herstellung.

Der Erfindung liegt die Aufgabe zugrunde, eine Antriebseinheit der eingangs beschriebenen Art derart weiterzubilden, daß die notwendigen Funktionen bei verringertem Aufwand ausgeführt werden; insbesondere sollen Kosten, Bauraum und Leitungsaufwand verringert werden.

Diese Aufgabe wird durch die Merkmale von Anspruch 1 gelöst.

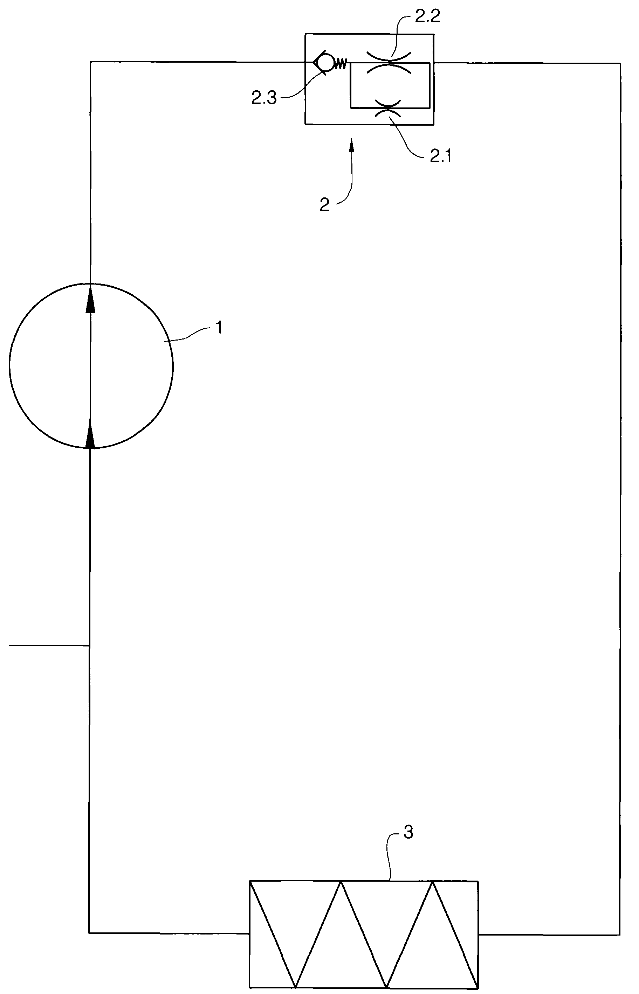

Die Erfindung ist anhand der Zeichnung näher erläutert. Dort ist ein Retardersystem schematisch dargestellt. Es umfaßt einen Retarder 1, eine diesem in Strömungsrichtung nachgeordnete Regeleinheit 2, sowie einen Kühler 3.

Die Aggregate sind durch Leitungen miteinander verbunden. Eine Leitung 4 befindet sich zwischen Kühler 3 und Retarder 1; eine Leitung 5 befindet sich zwischen Retarder 1 und Regeleinheit 2, und eine Leitung 6 befindet sich zwischen Regeleinheit 2 und Kühler 3.

Die Funktionen der Einheit bei bestimmten Betriebsphasen sind die folgenden:

### KONSTANTE DROSSELFUNKTION

Diese Betriebsphase liegt bei allen Bremspunkten auf der sogenannten Vollfüllparabel vor. Hierbei muß sichergestellt werden, daß während der Bremsphase ein ausreichender Durchsatz des Arbeitsmediums zu Kühlzwecken stattfindet. Dies geschieht durch die Regeleinheit 2.0 mit integrierter Drossel 2.1. Ebenso stellt die Drossel sicher, daß der Retarder ständig vollgefüllt ist.

### REGELFUNKTION

Um Bremsungen optimal regelbar und reproduzierbar ausführen zu können, ist es notwendig, in den Bereichen der Teillastbremsungen den Füllungsgrad des Arbeitsraumes des Retarders stetig zu variieren. Die Regeldrossel 2.2 als Bestandteil der Regeleinheit 2 übernimmt diese Funktion.

### RÜCKSCHLAGFUNKTION

Bei allen Betriebszuständen der Nicht-Brems-Phase muß sichergestellt sein, daß der Retarder 1 kein Arbeitsmedium über die Leitung 5 erhält. Dies wird sichergestellt durch das Rückschlagventil 2.3, das ebenfalls Bestandteil der Regeleinheit 2 ist.

Die drei genannten Funktionen werden durch Einzelelelemente ausgeführt, die alle Bestandteil der genannten Regeleinheit sind. Hierdurch werden die Zahl der Bauteile, der Umfang der Leitungen sowie der Bauraum drastisch verringert, und damit auch die Kosten gesenkt.

## Patentansprüche

1. Antriebseinheit;
1.1 mit einem hydrodynamischen Retarder (1);
1.2 der Retarder (1) umfaßt ein Rotorschaufelrad, ein Statorschaufelrad sowie eine diese beiden umschließende Wand;
1.3 mit einem Kühlmittelkreislauf, dessen Kühlmittel zugleich Arbeitsmedium des Retarders ist;
1.4 dem Retarder (1) ist eine Regeleinheit (2) in Fließrichtung des Arbeitsmediums nachgeordnet;
1.5 die Regeleinheit hat die folgenden Funktionen:
* eine Regelfunktion;
* Funktion der Einhaltung eines Mindest-Öffnungsquerschnittes;
* eine Rückschlagfunktion zum Absperren von Arbeitsmedium entgegen der gewollten Fließrichtung.

2. Antriebseinheit nach Anspruch 1, dadurch gekennzeichnet, daß die Regeleinheit (2) in das Retardergehäuse integriert ist.

3. Antriebseinheit nach Anspruch 1 oder 2, dadurch gekennzeichnet, daß die Funktionen der Regeleinheit (2) an verschiedene Orte gelegt sind, ggf. auch - in Fließrichtung gesehen - vor dem Retarder.
